# EUROPÄISCHE PATENTSCHRIFT

(11) **EP 2 274 127 B1**
(45) Veröffentlichungstag und Bekanntmachung des Hinweises auf die Patenterteilung: **17.10.2012**
(21) Anmeldenummer: 09726169.7
(22) Anmeldetag: 19.03.2009
(51) Int. Cl.: B23C 5/06, B23C 5/22

(54) **FRÄSWERKZEUG, INSBESONDERE PLANFRÄSER**
MILLING TOOL, PARTICULARLY FACE-MILLING CUTTER
OUTIL DE FRAISAGE, EN PARTICULIER FRAISE À SURFACER

(30) Priorität: 26.03.2008 DE 102008015603
(43) Veröffentlichungstag der Anmeldung: 19.01.2011
(73) Patentinhaber: Audi AG, 85045 Ingolstadt (DE)
(72) Erfinder: KOPTON, Peter, 85092 Kösching (DE)
(74) Vertreter: Geissler, Manfred
(86) Internationale Anmeldenummer: PCT/EP2009/002031
(87) Internationale Veröffentlichungsnummer: WO 2009/118126

(56) Entgegenhaltungen:
- EP-A- 0 123 887
- CH-A- 501 464
- DE-A1-102005 023 532

## Beschreibung

Die Erfindung betrifft ein Fräswerkzeug, insbesondere einen Planfräser, nach dem Oberbegriff des Anspruchs 1. Der Oberbegriff des Anspruchs 1 basiert auf der DE 10 2005023532.

Ein bekanntes Fräswerkzeug (DE 101 44 514 A1) besteht aus einem zylinderförmigen, rotationsantreibbaren Werkzeuggrundkörper, in dem am Umfang taschenartige Ausnehmungen angebracht sind. In diese Ausnehmungen sind Schneidkörpern eingesetzt, die radial und/oder axial am Werkzeuggrundkörper vorstehen und die durch jeweils zugeordnete Spannelemente gehalten sind.

In Drehrichtung vor den Schneidkörpern sind hier die Spannelemente so angeordnet, dass diese im fertig montierten Zustand gegenüber der Umfangsfläche des Werkzeuggrundkörpers und der Schneidkante der zugehörigen Schneidkörper radial nach innen versetzt liegen, wodurch ein Spanraum zur Aufnahme von Spänen geschaffen ist. Maßnahmen zur gezielten Spanabführung mit einer Trennung des Spanraums von der zu bearbeitenden Oberfläche sind nicht vorgesehen, sodass bei der Zerspanung der jeweilige Span ungehindert die zu bearbeitende Werkstückoberfläche berühren und dadurch gegebenenfalls beschädigen kann. Zudem sind hier die Schneidkörper lediglich durch einen Reibschluss gegen radiale Fliehkräfte gehalten, so dass eine solche Anordnung für Hochgeschwindigkeitsbearbeitungen mit großen Drehzahlen und hohen Fliehkräften nicht geeignet ist. Weiter ist ein ähnliches Fräswerkzeug bekannt (FR 2 422 468), bei dem ein Spanraum keine Trennung und damit keine gezielte Spanführungsfunktion zur bearbeitenden Werkstückoberfläche hin aufweist, so dass auch hier bei der Zerspanung durch den Span eine Beschädigung der zu bearbeitenden Werkstückfläche möglich ist. Auch hier sind die Schneidkörpern bezüglich Radialkräften nur eingeklemmt, so dass diese Halterung für Hochgeschwindigkeitsbearbeitungen nicht geeignet ist.

Weiter ist ein Fräswerkzeug in einer sogenannten Facettenausführung bekannt (DE 103 43 673 A1), wobei die Schneidkörper an Halterungen befestigt sind, welche ihrerseits in Kassetten am Werkzeuggrundkörper eingesetzt und gehalten sind. An solchen Kassetten sindSpanräume vorgesehen, wobei durch die Gestaltung aber auch hier der Span ungehindert die zu bearbeitende Werkstückoberfläche berühren und beschädigen kann und die Möglichkeit besteht, dass Späne mehrere Male geschnitten werden. In einer ähnlichen weiteren Ausführungsform eines Fräswerkzeugs (DE 197 16 818 C2) sind zusätzlich separate austauschbare Spanleitelemente vorgesehen, wobei aber durch die Gestalt offensichtlich auch hier der Span ungehindert die zu bearbeitende Oberfläche berühren und sie beschädigen kann, mit der Möglichkeit, dass Späne mehrere Male geschnitten werdne.

Weiter ist ein Schneideinsatz für ein Fräswerkzeug bekannt (DE 10 2005 023 532 A1), bei dem die Schneide und eine Spanleitfläche in den Schneideinsatz integriert sind, was diesen Schneideinsatz sehr teuer und technisch sehr aufwendig macht. Durch eine spezielle Ausgestaltung dieses aufwendigen Schneideinsatzes soll der von der Schneide abgetragene Span entfernt werden.

Aufgabe der Erfindung ist es, ein gattungsgemäßes Fräswerkzeug bei einfachem und kostengünstigem Aufbau so weiterzubilden, dass die von der Schneidkörper abgetragenen Späne von der zu bearbeitenden Werkstückoberfläche zur Vermeidung von Beschädigungen sicher und kontrolliert abtransportiert werden.

Diese Aufgabe wird mit den Merkmalen des Anspruchs 1 gelöst.

Erfindungsgemäß ist am Außenumfang des Fräswerkzeugs zumindest eine Späneführungskammer mit Spannleitflächen für einen kontrollierten Späneabtransport von der zu bearbeitenden Werkstückfläche integriert. Gemäß dem kennzeichnenden Teil des Patentanspruches 1 ist der Späneführungskammer zumindest ein Späneführungssteg zugeordnet, der die Späneführungskammer von der Werkstückfläche trennt. Der Späneführungssteg ist nach Art einer Trennwand ausgebildet, so dass die Späneführungskammer bezüglich der Rotationsrichtung zum Werkstück hin weitgehend abgeschlossen ist. Dadurch wird bei einer Planfräsung eine gezielte Späneabführung weg von der Werkstückoberfläche unterstützt, da die jeweilige Späneführungskammer durch den Späneführungssteg von der Werkstückfläche getrennt ist.

Bevorzugt kann der Späneführungssteg in der Axialrichtung des Werkzeuges stirnseitig angeordnet sein. Der Späneführungssteg ist somit in Gebrauchslage des Fräswerkzeuges unmittelbar an der Werkstückfläche positioniert, wodurch ein einwandfreier Späneabtransport weiter unterstützt wird.

Der Späneführungssteg kann nicht nur als Trennwand zur Werkstückfläche dienen, sondern in Doppelfunktion zugleich auch unmittelbar sowie zumindest teilweise die Späneführungskammer begrenzen. Der Späneführungssteg kann dabei zusätzlich in eine, die Späneführungskammer begrenzende Kammerwand übergehen, die sich in Axialrichtung des Fräswerkzeuges erstreckt und somit in etwa rechtwinklig zum Späneführungssteg angeordnet ist.

Um einen Abtransport der Späne weiter zu unterstützen, kann die Späneführungskammer nicht nur mittels des Späneführungsstegs in Axialrichtung des Fräswerkzeugs zu dessen Stirnseite hin geschlossen sein. Zusätzlich kann die Späneführungskammer in Radialrichtung nach außen offen gestaltet sein.

Zur technischen Realisierung des Späneführungssteges sind unterschiedliche Ausführungsformen denkbar. So kann der Späneführungssteg zumindest teilweise in einem separaten Einsatzteil ausgebildet sein, das am Fräswerkzeug befestigbar ist. Das Einsatzteil kann somit separat vom Fräswerkzeug sowohl bezüglich des Materials als auch bezüglich seiner Geometrie einem einwandfreien Späneabtransport angepasst werden. Bevorzugt kann das separate Einsatzteil unmittelbar am Grundkörper des Fräswerkzeuges, am Schneidkörper und/oder am Spannelement befestigt werden.

Alternativ dazu kann der Späneführungssteg im Sinne einer Bauteilreduzierung nicht als separates Einsatzteil bereitgestellt werden, sondern materialeinheitlich und/oder einstückig zumindest teilweise unmittelbar im Werkzeuggrundkörper, im Spannelement und/oder im Schneidkörper integriert werden. Auf diese Weise können die ohnehin vorhandenen Bauteile im Fräswerkzeug in Doppelfunktion zusätzlich auch den Späneführungssteg tragen.

So kann am Außenumfang des Spannelements die Späneführungskammer mit seinen Leitflächen für einen kontrollierten Späneabtransport von der zu bearbeiteten Werkstückfläche integriert werden.

Die Späneführungskammer kann bevorzugt zumindest teilweise im Schneidkörper selbst und/oder unmittelbar im Werkzeuggrundkörper integriert werden. In diesem Fall kann die Späneführungskammer zusammen mit den darin vorzusehenden taschenartigen Ausnehmungen in den Außenumfang des Werkzeuggrundkörpers eingearbeitet werden.

Gemäß einer Ausführungsform kann am Außenumfang der Spannelemente jeweils eine Späneführungskammer mit Spanleitflächen für einen kontrollierten Späneabtransport von der zu bearbeitenden Werkstückfläche integriert werden.

Durch die Integration der Späneführungskammer im Werkzeuggrundkörper, im Schneidelement oder im Spannelement wird ein sehr einfacher, kostengünstig herstellbarer Aufbau bei guter Funktion des Späneabtransports erreicht. Wartungen, insbesondere ein Austausch von Schneidkörpern und/oder Spannelementen kann schnell und einfach durchgeführt werden. Die Spannelemente können einfach hergestellt werden, da die Späneführungskammern mit den Spanleitflächen ausschließlich in den Spannelementen enthalten sind.

Das Fräswerkzeug kann als Planfräser verwendet werden, insbesondere für eine Bearbeitung einer Werkstückoberfläche senkrecht zur Rotationsachse. Der Planfräser weist eine Vielzahl am Umfang des Werkzeuggrundkörpers versetzt angeordneter und radial sowie axial vorstehender Schneidkörpern auf. Der Werkzeuggrundkörper und/oder bevorzugt die Späneführungskammer ist hier mit einem stirnseitigen, zur Werkstückoberfläche hin liegenden Späneführungssteg in der Art einer Trennwand ausgebildet, so dass die Späneführungskammer bezüglich der Rotationsrichtung zum Werkstück hin weitgehend abgeschlossen ist. Zusätzlich kann die Späneführungskammer zur gegenüberliegenden Seite steglos und nach radial außen offen sein. Dadurch wird bei einer Planfräsung eine gezielte Späneabführung weg von der Werkstückoberfläche erzielt, da von dort durch den Späneführungssteg die jeweilige Späneführungskammer getrennt liegt.

Grundsätzlich kann das Fräswerkzeug auch als Nutenfräser ausgerüstet werden, in dem die Späneführungskammer im Bereich der zu bearbeitenden Werkstückflächen als Nutenflächen zwei gegenüberliegende Späneführungsstege aufweist. Somit ist auch hier die Späneführungskammer bezüglich der Rotationsrichtung zum Werkstück hin weitgehend abgeschlossen, jedoch zwischen den Späneführungsstegen nach radial außen für eine gezielte Späneabführung offen.

Weiterhin wird vorgeschlagen, dass die Schneidkörpern jeweils passgenau und formschlüssig in den Ausnehmungen am Werkzeuggrundkörper einliegen und durch die zugeordneten Spannelemente bezüglich Radialkräften formschlüssig abgestützt und fixiert werden können. Diese Art der Halterung ist besonders für Hochgeschwindigkeitsbearbeitungen mit hohen Drehzahlen des Fräswerkzeugs geeignet, da dann die Schneidkörpern nicht nur durch einen Klemmschluss, sondern durch einen Formschluss sicher abgestützt und gegen Fliehkräfte gesichert gehalten sind.

Zweckmäßig kann dazu an jedem Spannelement jeweils im Bereich der Späneführungskammer eine radiale Durchgangsbohrung für die Aufnahme eines Befestigungselements, insbesondere einer Spannschraube, vorgesehen sein, wodurch eine sichere Halterung erreicht wird.

In einer Ausführungsform eines Spannelements kann dieses jeweils als Wippenspannelement ausgeführt mit einem axial gerichteten Wippensteg zur Abstützung in einer Nut am Grund der zugeordneten Ausnehmung und gegenüberliegend zum Befestigungselement mit einem Spannauflagerand zur Spannauflage an einer Auflageschulter eines Schneidkörpers sein. Ein solches Spannelement wird jeweils neben einem Schneidkörper angeordnet, wobei durch das Spannen des Wippenspannelements gegen die Auflageschulter der Schneidkörper jeweils eine Schneidkörper gehalten wird.

In einer alternativen Ausführungsform kann das Spannelement jeweils an beiden Seiten gegenüberliegend zum Befestigungselement Spannauflageränder aufweisen (ohne eine Abstützung über einen Wippensteg). Auch die Schneidkörper haben jeweils zu beiden Seiten Auflageschultern, so dass sich ein Spannelement beidseitig mit seinen Spannauflagerändern jeweils an den Auflageschultern der beiden benachbarten Schneidkörper abstützt. Auch diese Ausbildung und Anordnung führt zu einer sicheren Halterung der Schneidkörper.

Anhand einer Zeichnung wird die Erfindung weiter erläutert.

Es zeigen:
- Fig. 1: einen Fräskopf eines Planfräsers in einer Seitenansicht,
- Fig. 2: den Fräskopf nach Fig. 1 in einer Frontansicht,
- Fig. 3: eine vergrößerte perspektivische Darstellung eines Spannelements als Wippenspannelement,
- Fig. 4: eine Schnittteildarstellung durch ein Wippenspannelement und benachbarte Schneidkörper, und
- Fig. 5: eine vergrößerte Frontansicht auf ein Spannelement mit zwei Spannauflagerändern und benachbarte Schneidkörper.

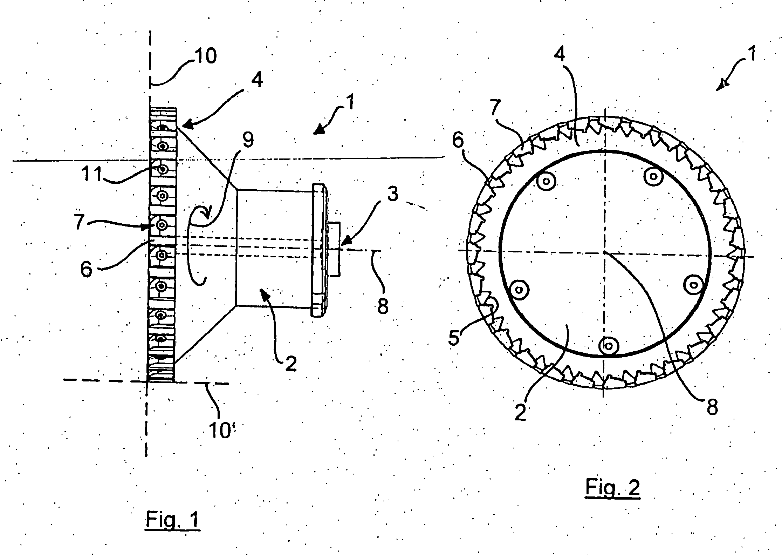

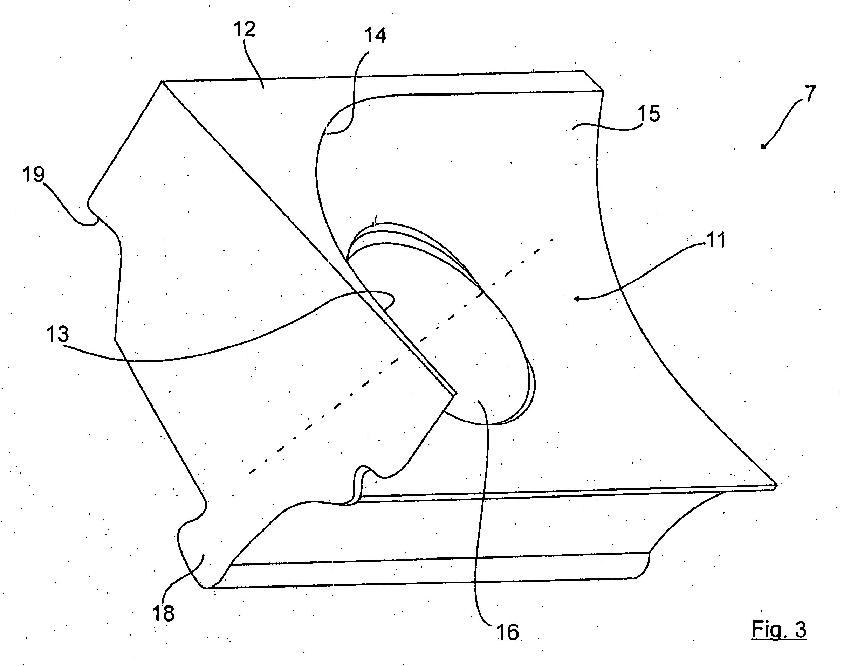

In den Fig. 1 und 2 ist ein Planfräser 1 in einer Seitenansicht und einer Frontdraufsicht dargestellt, der einen rotationssymmetrischen Werkzeuggrundkörper 2 aufweist, welcher sich von einem zylinderförmigen Bereich kegelförmig bis zu einem endseitigen Kreisring 4 erweitert. In diesem Kreisring 4 sind am Umfang jeweils aufeinanderfolgend eine Vielzahl von gleichen taschenartigen Ausnehmungen 5 angebracht, in die zum einen Schneidkörper 6 und angrenzend Spannelemente 7 als Spannpratzen eingesetzt sind, die weiter im Detail anhand der vergrößerten Darstellungen der Fig. 3 bis 5 erläutert werden.

Der Werkzeuggrundkörper 2 wird um eine Rotationsachse 8 entsprechend dem Drehpfeil 9 angetrieben. Für eine spanabhebende Planbearbeitung einer Werkstückoberfläche 10 senkrecht zur Rotationsachse 8 (oder gegebenenfalls für eine Werkstückoberfläche 10' achsparallel zur Rotationsachse 8) stehen die Schneidkörper 6 radial und/oder axial am Kreisring 4 des Werkzeuggrundkörpers 2 mit ihren Schneiden vor.

Wie bereits aus Fig. 1 ersichtlich, werden bei der Bearbeitung abgehobene Späne vor dem jeweiligen Schneidkörper 6 in Drehrichtung 9 jeweils in Späneführungskammern 11 geschoben, die am Außenumfang der Spannelemente 7 als muldenförmige Vertiefungen angebracht sind.

In Fig. 3 ist ein Spannelement 7 in der Art eines Wippenspannelements vergrößert dargestellt. Das Spannelement 7 hat etwa einen blockförmigen Aufbau mit einer Spanführungskammer 11, die als Vertiefung bezüglich der Außenumfangsfläche 12 ausgebildet ist. Dabei ist ein stirnseitiger Wandbereich als Späneführungssteg 13 gebildet, der die stirnseitige Trennwand der Späneführungskammer 11 zur Werkstückoberfläche 10 hin bildet. Der Späneführungssteg 13 geht in einer Rundung 14 in eine in Umfangs- und Rotationsrichtung zu einem dort benachbarten Schneidkörper liegenden Kammerwand 15 über, so dass insgesamt die Späneführungskammer 11 als Wannenausschnitt gebildet ist, der entgegen der Drehrichtung und gegenüberliegend zur Werkstückoberfläche 10 offen ist.

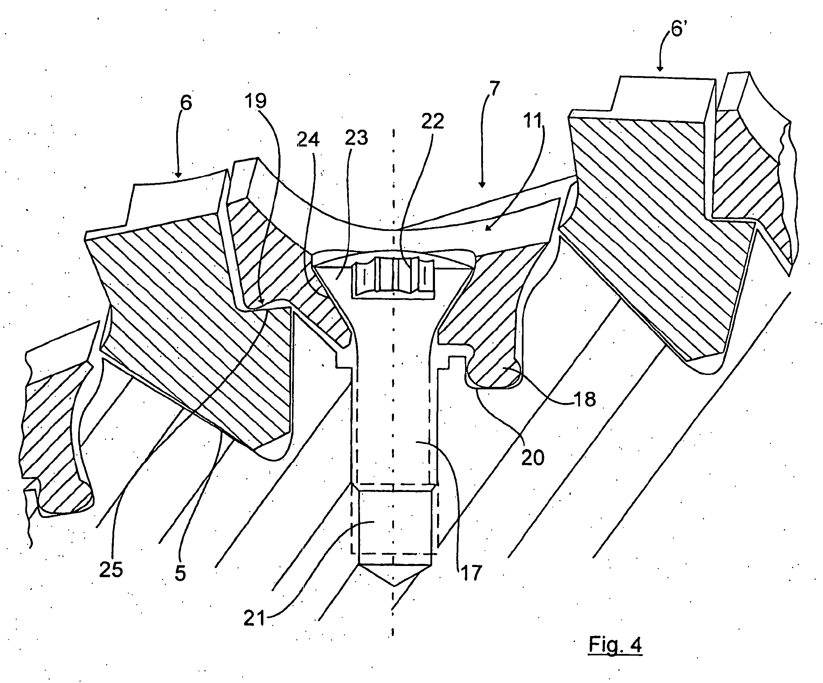

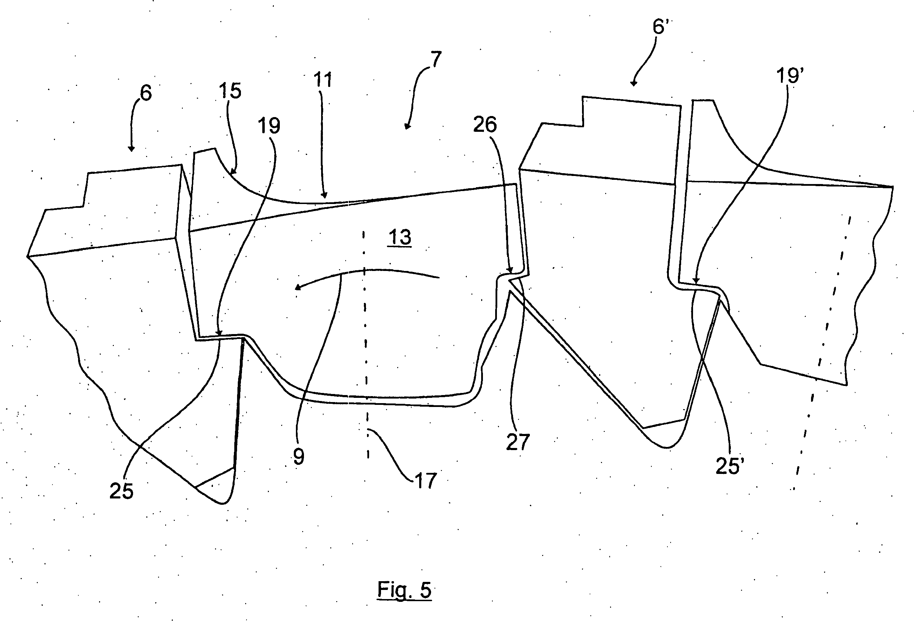

Das Spannelement 7 enthält zudem im Bereich der Späneführungskammer 11 eine zentrale, radial gerichtete Durchgangsbohrung 16 für die Aufnahme einer Spannschraube 17 (Fig. 4). Weiter sind an der Unterseite ein axial gerichteter seitlicher Wippensteg 18 und gegenüberliegend zur Durchgangsbohrung 16 ein Spannauflagerand 19 angebracht. Die Halterungsfunktion des Spannelements 7 in Verbindung mit den Schneidkörpern 6 sowie die Funktion der Späneführungskammer 11 werden anhand der Fig. 4 und 5 näher erläutert: In Fig. 5 ist ein Schnitt durch ein montiertes Spannelement 7 mit benachbarten Schneidkörpern 6, 6' in einer Schnittebene parallel zur Werkstückoberfläche 10 durch die Durchgangsbohrungen 16 gezeigt. Daraus ist die Gestalt der Ausnehmungen 5 ersichtlich, die sich im Bereich der Schneidkörper 6, 6' jeweils nach unten keilförmig für eine passgenaue und formschlüssige Aufnahme der Schneidkörper 6, 6' verjüngen. Angrenzend geht jede Ausnehmung 5 in einen Bereich zur Aufnahme des zugeordneten Spannelements 7 über mit einer dem Wippensteg 18 zugeordneten Nut 20 und einer Schraubenbohrung 21 zum Einsatz der Spannschraube 17. Die Spannschraube 17 hat einen Innenwerkzeugansatz 22 und ist mit einem Senkkopf 23 in einer entsprechenden kegelförmigen Ausnehmung 24 am Boden der Späneführungskammer 11 versenkt gehalten.

In der dargestellten Anordnung stützt sich das Spannelement 7 mit dem Wippensteg 18 in der Nut 20 ab und wird beim Anziehen der Spannschraube 17 mit ihrem Spannauflagerand 19 gegen eine Auflageschulter 25 des Schneidkörpers 6 gepresst, wodurch dieser in den keilförmigen Bereich der Ausnehmung 5 gespannt und gegen Fliehkräfte sicher formschlüssig gehalten ist. In Fig. 5 ist eine Darstellung entsprechend Fig. 4 gezeigt, jedoch aus der Sicht der zu bearbeitenden Werkstückoberfläche (ohne Schnitt) mit einer alternativen Ausführungsform eines Spannelementes 7. Ersichtlich weist diese Ausführungsform des Spannelements 7 zusätzlich zum Spannauflagerand 19 gegenüberliegend einen zweiten Spannauflagerand 26 auf. Der Spannauflagerand 19 stützt sich entsprechend der Ausführungsform nach Fig. 4 an einer Auflageschulter 25 des einen (linken) Schneidkörpers 6 ab, während sich der gegenüberliegende Spannauflagerand 26 an einer zugeordneten Auflageschulter 27 des anderen (rechten) Schneidkörpers 6' abstützt. Somit sind hier mit diesem Spannelement 7 jeweils zwei benachbarte Schneidkörper 6, 6' gehalten und verspannt, wobei die Spannschraube 17 hier nur abstrakt mit einer strichpunktierten Linie angegeben ist.

In Verbindung mit der Drehrichtung (Drehrichtungspfeil 9) ist ersichtlich, dass von dem Schneidkörper 6' von der Werkstückoberfläche abgehobene Späne in die Späneführungskammer 11 gelangen, wobei der Späneführungssteg 13 eine Trennwand zur Werkstückoberfläche bildet. Wesentlich dabei ist, dass der Späneführungssteg 13 bzw. die Trennwand schmal zum Schneidkörper 6' hin ausläuft. Durch diesen Späneführungssteg 13 als Trennwand ist sichergestellt, dass abgehobene Späne sicher von einer Berührung und Beschädigung der zu bearbeitenden Werkstückoberfläche abgehalten werden. Der Wegtransport aus der Späneführungskammer 11 erfolgt über die freie Öffnung gegenüberliegend zum Späneführungssteg 13.

## Patentansprüche

1. Fräswerkzeug, insbesondere Planfräser, mit einem rotationssymmetrischen, drehantreibbaren Werkzeuggrundkörper (2), in dem am Umfang zumindest eine taschenartige Ausnehmung (5) angebracht ist, mit einem in der Ausnehmung (5) eingesetzten Schneidkörper (6, 6'), der radial und/oder axial am Werkzeuggrundkörper (2) vorsteht und der durch zumindest ein Spannelement (7) gehalten ist, wobei am Außenumfang des Fräswerkzeugs zumindest eine Späneführungskammer (11) mit Spanleitflächen (13) für einen kontrollierten Späneabtranspor weg von der zu bearbeitenden Werkstückfläche (10) ausgebildet ist, wobei
der Späneführungskammer (11) zumindest ein Späneführungssteg (13) zugeordnet ist, **dadurch gekennzeichnet, dass** dass die Späneführungskammer (11) in Axialrichtung des Fräswerkzeugs zu dessen Stirnseite mittels des Späneführungsstegs (13) geschlossen ist, der als eine Trennwand die Späneführungskammer (11) von der Werksfückfläche (10) trennt, so dass abgehobene Späne sicher von einer Berührung und Beschädigung der zu bearbeitenden Werkstückoberfläche (10) abgehalten werden.

2. Fräswerkzeug nach Anspruch 1, **dadurch gekennzeichnet, dass** der Späneführungssteg (13) in Axialrichtung des Fräswerkzeugs stirnseitig angeordnet ist.

3. Fräswerkzeug nach Anspruch 1 oder 2, **dadurch gekennzeichnet, dass** der Späneführungssteg (13) zumindest teilweise die Späneführungskammer (11) begrenzt.

4. Fräswerkzeug nach Anspruch 1, 2 oder 3, **dadurch gekennzeichnet, dass** der Späneführungssteg (13) in eine die Späneführungskammer (11) begrenzende Kammerwand (15) übergeht, die sich insbesondere in Axialrichtung des Fräswerkzeugs erstreckt.

5. Fräswerkzeug nach einem der vorherigen Ansprüche, **dadurch gekennzeichnet, dass** der Späneführungssteg (13) zumindest teilweise ein separates Einsatzteil ist, das am Fräswerkzeug, insbesondere an dessen Grundkörper (2), Schneidkörper (6, 6') oder Spannelement (7) befestigbar ist.

6. Fräswerkzeug nach einem der Ansprüche 1 bis 4, **dadurch gekennzeichnet, dass** der Späneführungssteg (13) materialeinheitlich und/oder einstückig zumindest teilweise im Werkzeuggrundkörper (2), im Spannelement (7) und/oder im Schneidkörper (6, 6') integriert ist.

7. Fräswerkzeug nach einem der vorhergehenden Ansprüche **dadurch gekennzeichnet, dass** die Späneführungskammer (11) zur, den Werkstückoberfläche (10) gegenüberliegenden Seite hin steglos ist.

8. Fräswerkzeug nach einem der vorhergehenden Ansprüche **dadurch gekennzeichnet, dass** die Späneführungskammer (11) als Wannenteilausschnitt gebildet ist mit dem Späneführungssteg (13) als zum angrenzenden, schneidaktiven Schneidkörper (6') schmal auslaufende Kammerwand, die insbesondere in einer Rundung (14) in die in Rotationsrichtung liegende Kammerquerwand (15) übergeht.

9. Fräswerkzeug nach einem der vorhergehenden Ansprüche, **dadurch gekennzeichnet, dass** der Schneidkörper (6, 6') jeweils passgenau und formschlüssig in der Ausnehmung (5) einliegt und durch das zugeordneten Spannelement (7) bezüglich Radialkräften formschlüssig abgestützt und fixiert ist.

10. Fräswerkzeug nach einem der vorhergehenden Ansprüchen **dadurch gekennzeichnet, dass** das Spannelement (7) jeweils im Bereich der Späneführungskammer (11) eine radiale Durchgangsbohrung (16) für die Aufnahme eines Befestigungselements, insbesondere einer Spannschraube (17), aufweist.

11. Fräswerkzeug nach einem der vorhergehenden Ansprüche **dadurch gekennzeichnet, dass** das Spannelement (7) jeweils als Wippenspannelement ausgebildet ist mit einem axial gerichteten Wippensteg (18) zur Abstützung in einer Nut (20) am Grund der zugeordneten Ausnehmung (5) und gegenüberliegend zum Befestigungselement (17) mit einem Spannauflagerand (19) zur Spannauflage an einer Auflageschulter (25) des Schneidkörpers (6, 6').

12. Fräswerkzeug nach einem der vorhergehenden Ansprüche **dadurch gekennzeichnet, dass** das Spannelement (7) jeweils an beiden Seiten gegenüberliegend zum Befestigungselement (17) Spannauflageränder (19, 26) aufweist, und dass die Schneidkörper (6, 6') ebenfalls zu beiden Seiten Auflageschultern (25, 27) aufweisen, so dass sich ein Spannelement (7) beidseitig mit seinen Spannauflagerändern (19, 26) jeweils an den Auflageschultern (25, 27) der beiden benachbarten Schneidkörper (6, 6') abstützt.

13. Fräswerkzeug nach einem der vorhergehenden Ansprüchen **dadurch gekennzeichnet, dass** das Fräswerkzeug als Planfräser (1) mit einer Vielzahl am Umfang des Werkzeuggrundkörpers (2) versetzten und radial sowie axial vorstehenden Schneidkörpern (6, 6') ausgebildet ist.

14. Fräswerkzeug nach einem der vorhergehenden Ansprüche, **dadurch gekennzeichnet, dass** das Fräswerkzeug als Nutenfräser ausgebildet ist, und dass die Späneführungskammer (11) im Bereich der zu bearbeitenden Werkstückflächen zwei gegenüberliegende Späneführungsstege aufweist, so dass die Späneführungskammer (11) bezüglich der Rotationsrichtung zum Werkstück hin weitgehend abgeschlossen ist, jedoch dazwischen nach radial außen für eine gezielte Späneabführung offen ist.

15. Fräswerkzeug nach einem der vorhergehenden Ansprüche, **dadurch gekennzeichnet, dass** die Späneführungskammer (11) zumindest teilweise im Spannelement (7) integriert ist.

16. Fräswerkzeug nach einem der Ansprüche 1 bis 15, **dadurch gekennzeichnet, dass** die Späneführungskammer (11) zumindest teilweise im Schneidkörper (6, 6') und/oder im Werkzeuggrundkörper (2) integriert sind.

## Claims

1. Milling tool, in particular a face-milling cutter, comprising a rotationally symmetrical tool main body (2) which can be driven in rotation and in which at least one pocket-like recess (5) is formed at the periphery, comprising a cutting body (6, 6') which is inserted in the recess (5), projects radially and/or axially at the main tool body (2) and is held by at least one clamping element (7), at least one chip guiding chamber (11) comprising chip guide faces (13) for controlled removal of chips from the workpiece face (10) to be machined being formed at the outer periphery of the milling tool, the chip guiding chamber (11) being assigned at least one chip guiding web (13), **characterised in that** the chip guiding chamber (11) is closed in the axial direction of the milling tool at the end face thereof by means of the chip guiding web (13) which, as a dividing wall, separates the chip guiding chamber (11) from the workpiece face (10) such that removed chips are safely prevented from touching and damaging the workpiece surface (10) to be machined.

2. Milling tool according to claim 1, **characterised in that** the chip guiding web (13) is arranged at the end face in the axial direction of the milling tool.

3. Milling tool according to either claim 1 or claim 2, **characterised in that** the chip guiding web (13) limits the chip guiding chamber (11), at least in part.

4. Milling tool according to claim 1, 2 or 3, **characterised in that** the chip guiding web (13) transitions into a chamber wall (15) which limits the chip guiding chamber (11) and which extends in particular in the axial direction of the milling tool.

5. Milling tool according to any of the preceding claims, **characterised in that** the chip guiding web (13) is, at least in part, a separate insert part which can be fastened to the milling tool, in particular to the main body (2), cutting body (6, 6') or clamping element (7) thereof.

6. Milling tool according to any of claims 1 to 4, **characterised in that** the chip guiding web (13) is integrated, at least in part, in the tool main body (2), in the clamping element (7) and/or in the cutting body (6, 6'), being integral therewith and/or formed from the same material.

7. Milling tool according to any of the preceding claims, **characterised in that** the chip guiding chamber (11) has no web towards the side opposite the workpiece surface (10).

8. Milling tool according to any of the preceding claims, **characterised in that** the chip guiding chamber (11) is formed as a trough partial cut-out having the chip guiding web (13) as a chamber wall which tapers towards the adjacent, active cutting body (6') and which transitions, in particular in a curve (14), into the chamber transverse wall (15) located in the rotational direction.

9. Milling tool according to any of the preceding claims, **characterised in that** in each case the cutting body (6, 6') fits in the recess (5) precisely and with positive locking and is supported and fixed with positive locking with respect to radial forces by the assigned clamping element (7).

10. Milling tool according to any of the preceding claims, **characterised in that** in each case the clamping element (7) comprises in the region of the chip guiding chamber (11) a radial through-hole (16) for receiving a fastening element, in particular a clamping screw (17).

11. Milling tool according to any of the preceding claims, **characterised in that** in each case the clamping element (7) is formed as a rocker clamping element having an axially directed rocker web (18) to be supported in a slot (20) at the base of the assigned recess (5) and opposite the fastening element (17) having a clamping support edge (19) for clamping support on a support shoulder (25) of the cutting body (6, 6').

12. Milling tool according to any of the preceding claims, **characterised in that** in each case the clamping element (7) comprises clamping support edges (19, 26) on each side, opposite the fastening element (17), and **in that** the cutting body (6, 6') likewise comprises support shoulders (25, 27) on each side, such that a clamping element (7) rests with its clamping support edges (19, 26) on the respective support shoulders (25, 27) of the two adjacent cutting bodies (6, 6').

13. Milling tool according to any of the preceding claims, **characterised in that** the milling tool is formed as a face-milling cutter (1) comprising a plurality of cutting bodies (6, 6') which are offset at the periphery of the tool main body (2) and project radially and axially.

14. Milling tool according to any of the preceding claims, **characterised in that** the milling tool is formed as a slot milling cutter and **in that** the chip guiding chamber (11) comprises two opposing chip guiding webs in the region of the workpiece faces to be machined, such that the chip guiding chamber (11) is largely closed with respect to the rotational direction towards the workpiece, but is radially outwardly open in between for targeted chip removal.

15. Milling tool according to any of the preceding claims, **characterised in that** the chip guiding chamber (11) is integrated in the clamping element (7), at least in part.

16. Milling tool according to any of claims 1 to 15, **characterised in that** the chip guiding chambers (11) are integrated in the cutting body (6, 6') and/or in the tool main body (2), at least in part.

## Revendications

1. Outil de fraisage, en particulier fraise à surfacer, présentant un corps de base d'outil (2) à symétrie de rotation, entraînable en rotation, à la périphérie duquel est ménagé au moins un évidement en forme de poche (5), un corps de coupe (6, 6') inséré dans l'évidement (5), lequel corps de coupe fait saillie radialement et/ou axialement sur le corps de base (2) de l'outil et est retenu par au moins un élément de serrage (7), dans lequel il est formé, à la périphérie externe de l'outil de fraisage, au moins une chambre de guidage de copeaux (11) avec des surfaces conductrices de copeaux (13) pour une voie d'évacuation contrôlée des copeaux de la surface (10) de la pièce à usiner, dans lequel est affectée à la chambre de guidage de copeaux (11) au moins une moulure de guidage de copeaux (13), et **caractérisé en ce que** la chambre de guidage de copeaux (11) est fermée dans la direction axiale de l'outil de fraisage sur son côté frontal au moyen de la moulure de guidage de copeaux (13), que la chambre de guidage de copeaux (11) sépare de la surface de la pièce à usiner (10) par une mince paroi pour empêcher de manière sûre les copeaux arrachés de venir en contact avec la surface de la pièce à usiner (10) et de l'endommager.

2. Outil de fraisage selon la revendication 1, **caractérisé en ce que** la moulure de guidage de copeaux (13) est agencée côté frontal dans la direction axiale de l'outil de fraisage.

3. Outil de fraisage selon la revendication 1 ou la revendication 2, **caractérisé en ce que** la moulure de guidage de copeaux (13) délimite au moins en partie la chambre de guidage de copeaux (11).

4. Outil de fraisage selon la revendication 1, 2 ou 3, **caractérisé en ce que** la moulure de guidage de copeaux (13) se fond dans une paroi de chambre (15) délimitant la chambre de guidage de copeaux (11), laquelle paroi s'étend en particulier dans la direction axiale de l'outil de fraisage.

5. Outil de fraisage selon l'une quelconque des revendications précédentes, **caractérisé en ce que** la moulure de guidage de copeaux (13) est au moins en partie une pièce rapportée séparée, qui peut être fixée sur l'outil de fraisage, en particulier sur son corps de base (2), sur son corps de coupe (6, 6') ou sur son élément de serrage (7).

6. Outil de fraisage selon l'une quelconque des revendications 1 à 4, **caractérisé en ce que** la moulure de guidage de copeaux (13) est intégrée au plan des matériaux et/ou d'un seul tenant au moins en partie au corps de base (2) de l'outil, à l'élément de serrage (7) et/ou au corps de coupe (6, 6').

7. Outil de fraisage selon l'une quelconque des revendications précédentes, **caractérisé en ce que** la chambre de guidage de copeaux (11) ne présente pas de moulure du côté en regard de la surface (10) de la pièce à usiner.

8. Outil de fraisage selon l'une quelconque des revendications précédentes, **caractérisé en ce que** la chambre de guidage de copeaux (11) est conformée en section partielle de cuve avec la moulure de guidage de copeaux (13) comme paroi de chambre se terminant étroitement sur le corps de coupe (6') limitrophe actif en matière de coupe, laquelle paroi se fond en particulier en profil arrondi (14) dans la paroi transversale (15) de la chambre se trouvant dans la direction de rotation.

9. Outil de fraisage selon l'une quelconque des revendications précédentes, **caractérisé en ce que** le corps de coupe (6, 6') s'insère respectivement avec précision et adaptation de forme dans l'évidement (5) et est étayé et fixé avec adaptation de forme par l'élément de serrage affecté (7) en matière de forces radiales.

10. Outil de fraisage selon l'une quelconque des revendications précédentes, **caractérisé en ce que** l'élément de serrage (7) présente respectivement dans la zone de la chambre de guidage de copeaux (11) un alésage de passage radial (16) pour recevoir un élément de fixation, en particulier une vis de serrage (17).

11. Outil de fraisage selon l'une quelconque des revendications précédentes, **caractérisé en ce que** l'élément de serrage (7) est formé respectivement d'un élément de serrage basculant avec une moulure basculante (18) dirigée axialement pour prendre appui dans une rainure (20) à la base de l'évidement affecté (5) et en regard de l'élément de fixation (17) avec un bord d'appui de serrage (19) pour appui de serrage sur un épaulement d'application (25) du corps de coupe (6, 6').

12. Outil de fraisage selon l'une quelconque des revendications précédentes, **caractérisé en ce que** l'élément de serrage (7) présente respectivement sur les deux côtés en regard de l'élément de fixation (17) des bords d'appui de serrage (19, 26) et **en ce que** les corps de coupe (6, 6') présentent également sur les deux côtés des épaulements d'appui (25, 27) de sorte qu'un élément de serrage (7) s'appuie des deux côtés par ses bords d'appui de serrage (19, 26) respectivement sur les épaulements d'appui (25, 27) des deux corps de coupe voisins (6, 6').

13. Outil de fraisage selon l'une quelconque des revendications précédentes, **caractérisé en ce que** l'outil de fraisage est conformé en fraiseuse à surfacer (1) avec une pluralité de corps de coupe (6, 6') décalés sur la périphérie du corps de base (2) de l'outil et faisant saillie tant radialement qu'axialement.

14. Outil de fraisage selon l'une quelconque des revendications précédentes, **caractérisé en ce que** l'outil de fraisage est conformé en fraiseuse à rainurer et **en ce que** la chambre de guidage de copeaux (11) présente, dans la zone des surfaces de la pièce à usiner, deux moulures de guidage de copeaux opposées de sorte que la chambre de guidage de copeaux (11) soit largement fermée concernant la direction de rotation vers la pièce à usiner, mais soit ouverte pour une évacuation de copeaux ciblée entre eux radialement vers l'extérieur.

15. Outil de fraisage selon l'une quelconque des revendications précédentes, **caractérisé en ce que** la chambre de guidage de copeaux (11) est intégrée au moins en partie à l'élément de serrage (7).

16. Outil de fraisage selon l'une quelconque des revendications 1 à 15, **caractérisé en ce que** les chambres de guidage de copeaux (11) sont intégrées au moins en partie au corps de coupe (6, 6') et/ou au corps de base (2) de l'outil.
